# EUROPÄISCHE PATENTSCHRIFT

(11) **EP 2 213 535 B1**
(45) Veröffentlichungstag und Bekanntmachung des Hinweises auf die Patenterteilung: **20.05.2015**
(21) Anmeldenummer: 09012911.5
(22) Anmeldetag: 13.10.2009
(51) Int. Cl.: B60T 8/1761, B60T 8/1763, B60T 8/88

(54) **ABS-Regelverfahren für ein Fahrzeug und Fahrzeug mit einem ABS-Bremssystem**
ABS control method for a vehicle and vehicle with an ABS braking system
Procédé de réglage ABS pour un véhicule et véhicule doté d'un système de freinage ABS

(30) Priorität: 30.01.2009 DE 102009006743
(43) Veröffentlichungstag der Anmeldung: 04.08.2010
(73) Patentinhaber: WABCO GmbH, 30432 Hannover (DE)
(72) Erfinder: Breipohl, Hans-Jörg, 30926 Seelze (DE); Pannbacker, Helmut, 30966 Hemmingen (DE)
(74) Vertreter: Lauerwald, Jörg

(56) Entgegenhaltungen:
- EP-A2- 0 719 685
- DE-A1- 3 814 457
- DE-A1- 4 413 452
- US-A- 3 843 209
- US-A- 5 273 349
- US-A1- 2002 156 566

## Beschreibung

Die Erfindung betrifft ein ABS-Regelverfahren für ein Fahrzeug und ein Fahrzeug mit einem ABS-Bremssystem.

Fahrzeuge mit einem ABS-Bremssystem sind grundsätzlich bekannt. Ein derartiges Fahrzeug umfasst in der Regel mehrere, auf Vorder- und Hinterachsen angeordnete Räder mit Radbremsen, die über Bremszylinder zur Erzielung einer Bremswirkung betätigbar sind. Die Bremszylinder sind üblicherweise über Druckänderungen mittels Druckmodulatoren zum Aufbau der gewünschten Bremskraft steuerbar. Die Druckmodulatoren sind wiederum mit einem elektronischen ABS-Steuergerät verbunden und über dieses steuerbar.

Das ABS-Steuergerät ist grundsätzlich derart eingerichtet, dass es bei einer Bremsung des Fahrzeuges ein Blockieren der Räder verhindert. Droht ein Rad beim Bremsen zu blockieren, wird der Bremsdruck dieses Rades vermindert, und nach einem Wiederanlaufen des Rades wieder stufenweise erhöht. Ein derartiger Regelzyklus kann mehrere Male ablaufen.

Beim Abbremsen des Fahrzeuges, sowohl bei einer Teilbremsung als auch bei einer vollständigen Abbremsung gegen Bremsende, kann es durch die Aktivität des ABS-Bremssystems zu einem unkomfortablen Schütteln oder Schwingen des Fahrzeuges kommen. Ursächlich für das Schütteln ist das Abbremsen und Wiederanlaufen der durch das ABS-Bremssystem während der Bremsung beeinflussten Räder. Dieser unangenehme Effekt wird insbesondere verstärkt durch eine weiche Achsaufhängung des Fahrzeuges, wie sie beispielsweise an Vorderachsen von Nutzfahrzeugen wie Lastkraftwagen üblich ist. Zudem kann es bei einem herkömmlichen ABS-Bremssystem gegen Bremsende bei niedrigen Fahrzeuggeschwindigkeiten zu einem vollständigen Blockieren der Räder kommen, was ebenfalls diesen Effekt verstärkt. Dieses Schütteln tritt vor allem dann auf, wenn sich das Fahrzeug auf einem glatten Untergrund, beispielsweise auf Schnee oder Eis oder einer nassen Fahrbahn, befindet.

Die DE 3 814 457 A1 beschreibt ein Verfahren zum Regeln des Bremsdruckes in einer blockiergeschützten Fahrzeug-Bremsanlage, wobei zur Anpassung der Regelung des Bremsdruckes an den herrschenden Haftreibwert der Fahrbahn, bei Beginn einer Bremsung, vor dem ersten Absenken des Bremsdruckes im Verlauf der Regelung ein vom Haftreibwert der Fahrbahn abhängiges Signal gewonnen wird und entsprechend diesem gewonnenen Signal ein für das Ansprechen der Regelung maßgeblicher Schwellenwert eingestellt wird.

Aufgabe der vorliegenden Erfindung ist es, ein ABS-Regelverfahren für ein Fahrzeug zu schaffen, bei dem ein derartiges Schütteln oder Schwingen sowohl bei einer Teilbremsung als auch bei einer Vollbremsung gegen Bremsende reduziert ist. Eine weitere Aufgabe der Erfindung ist es, ein Fahrzeug mit einer ABS-Bremssystem zu schaffen, bei dem das ABS-Bremssystem eine komfortable Bremsung ermöglicht.

Diese Aufgaben werden durch zwei ABS-Regelverfahren und durch ein Fahrzeug mit einem ABS-Bremssystem gemäß den unabhängigen Ansprüchen gelöst.

Vorteilhafte Weiterbildungen sind Gegenstände der abhängigen Ansprüche.

Gemäß dem erfindungsgemäßen ABS-Regelverfahren für ein Fahrzeug mit mindestens einem Rad mit einer Radbremse wird mindestens ein ABS-Regelparameter derart verändert, das eine dem Rad zugeordnete Radregelamplitude (V_R) gegenüber einer durch unveränderte ABS-Regelparameter hervorgerufenen Radregelamplitude reduziert ist, wenn ein Reibwert zwischen dem Rad und einem Raduntergrund einen Reibschwellenwert erreicht oder unterschreitet;
wobei bei einem Erreichen oder Unterschreiten des Reibschwellenwertes die ABS-Regelparameter der Hinterräder asynchron geregelt werden.

Der Reibwert, der grundsätzlich Werte von 0 bis 1 einnehmen kann, entspricht hier dem Reibungskoeffizienten zwischen Rad und Raduntergrund.

Die Radregelamplitude ist bestimmt durch die lokalen Maxima der Differenz zwischen einer tatsächlichen Fahrzeuggeschwindigkeit des Fahrzeugs und einer tatsächlichen Radgeschwindigkeit des zu regelnden Rades während der ABS-Regelung.

Das erfindungsgemäße Verfahren ermöglicht es, zu verhindern, dass beim Eintritt einer oder mehrerer der genannten Bedingungen eine zu große Radregelamplitude durch die ABS-Regelung erzeugt wird, die zu einem unangenehmen Schütteln des Fahrzeugs bzw. zu einer verringerten Abbremsung führt, insbesondere bei weichen Achsaufhängungen. Des Weiteren kann durch das erfindungsgemäße ABS-Regelverfahren bei "normalen" Bedingungen eine effektive ABS-Regelung gewährleistet werden, wie beispielsweise auf einem Raduntergrund mit genügend großem Reibwert. Die ABS-Regelparameter, oder zumindest ein ABS-Regelparameter, werden beim Eintritt einer oder mehrerer der genannten Bedingungen für ein vorteilhaftes Bremsverhalten mit aktivierter ABS-Regelung angepasst.

Um einen merklichen Effekt bei Erfüllung mindestens einer der Bedingungen zu erhalten, wird der mindestens eine ABS-Regelparameter vorzugsweise derart verändert, dass die Radregelamplitude mindestens um 20%, besonders vorzugsweise mindestens um 50% oder mehr gegenüber der durch unveränderte ABS-Regelparameter hervorgerufenen Radregelamplitude reduziert ist.

Es können zusätzliche Bedingungen vorausgesetzt werden, damit der mindestens eine ABS-Regelparameter für die Reduzierung der Radregelamplitude verändert wird.

In einer vorteilhaften Weiterbildung wird der mindestens eine ABS-Regelparameter verändert, wenn eine Fahrzeuggeschwindigkeit des Fahrzeugs kleiner gleich 20km/h und der Reibwert kleiner gleich einem Reibschwellenwert von 0,2 ist, die Fahrzeuggeschwindigkeit des Fahrzeugs kleiner gleich 12km/h und der Reibwert kleiner gleich einem Reibschwellenwert von 0,3 ist, und/oder kein Split vorliegt. Die Split-Bedingungen liegen vor, wenn ein merklicher Unterschied zwischen den Reibwerten zwischen Rädern und Raduntergrund auf der einen Seite des Fahrzeuges und Rädern und Raduntergrund auf der anderen Seite des Fahrzeuges vorliegt, beispielsweise bei einem uneinheitlichen Fahrzeuguntergrund.

Gemäß dem zweiten erfindungsgemäßen ABS-Regelverfahren, das sich auf ein Fahrzeug mit mindestens einem Vorderrad mit einer Vorderradbremse und mindestens zwei auf einer gemeinsamen Hinterachse des Fahrzeugs angeordneten Hinterrädern mit jeweils einer Hinterradbremse, sowie einem die Bremskraft des mindestens einen Vorderrades steuernden Vorderradbremszylinder und einem die Bremskraft des jeweiligen Hinterrades steuernden ersten Hinterradbremszylinder und zweiten Hinterradbremszylinder bezieht, wird der mindestens eine Vorderradbremszylinder nach einem Verfahren gemäß einem der Ansprüche 1 bis 12 geregelt, und in einer Einsteuerphase des ersten Hinterradbremszylinders der zweite Hinterradbremszylinder in einer Haltezeit gehalten, und der zweite Hinterradbremszylinder vorzugsweise so lange in der Haltezeit gehalten, bis die Einsteuerphase und/oder eine auf die Einsteuerphase folgende Entlüftungsphase des ersten Hinterradbremszylinders abgeschlossen ist, oder bis die Einsteuerphase des Hinterradbremszylinders einen vorgegebenen zeitlichen Einsteuerschwellenwert überschritten hat, und umgekehrt.

Die ABS-Regelung der Hinterräder ist somit asynchron. Diese Maßnahme verbessert ebenfalls das Fahrzeugverhalten während einer ABS-Regelung, insbesondere bei niedrigen Reibwerten, sowohl bei einer Teilbremsung als auch gegen Bremsende.

Das erfindungsgemäße Fahrzeug umfasst mindestens ein ABS-Bremssystem, ein Rad mit einer Radbremse und einen die Bremskraft des Rades steuernden Bremszylinder, wobei das ABS-Bremssystem zur Durchführung eines erfindungsgemäßen ABS-Regelverfahrens gemäß den Ansprüchen 1 bis 13 eingerichtet ist. Unter einem ABS-Bremssystem sind dabei alle Bremssysteme zu verstehen, die eine ABS-Regelung umfassen, so beispielsweise auch ein EBS-Bremssystem mit einer integrierten ABS-Regelung.

Die Erfindung wird im Folgenden anhand von Ausführungsbeispielen, die durch Figuren dargestellt sind, näher erläutert. Dabei zeigt:
- Fig. 1: eine erste Ausführungsform eines Fahrzeuges mit einem ABS-Bremssystem,
- Fig. 2: eine zweite Ausführungsform eines Fahrzeuges mit einem ABS-Bremssystem, und
- Fig. 3: drei Diagramme, die das Verhalten einer Fahrzeuggeschwindigkeit, einer Radgeschwindigkeit, einer Radumfangsbeschleunigung und einen Druck in einem Radbremszylinder in Abhängigkeit der Zeit darstellen.

Gleiche oder einander entsprechende Bauteile sind in den Figuren mit denselben Bezugszeichen versehen.

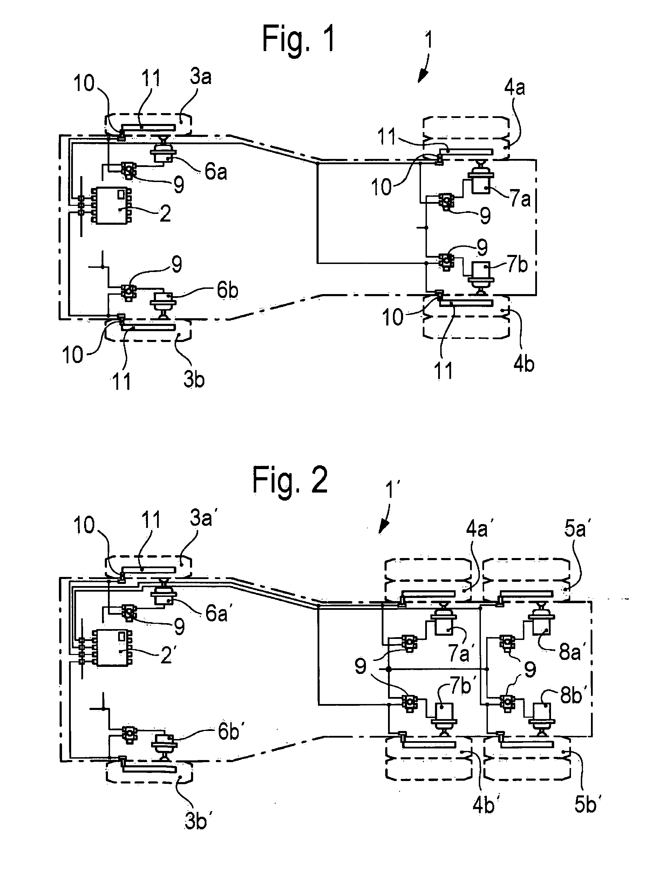

Die Figur 1 zeigt eine erste Ausführungsform eines Fahrzeuges 1, das ein ABS-Bremssystem aufweist. Das Fahrzeug 1, hier eine Sattelzugmaschine, umfasst zwei auf einer Vorderachse angeordnete Vorderräder 3a, 3b und zwei auf einer Hinterachse angeordnete Hinterräder 4a, 4b. Jedes einzelne Rad 3a, 3b, 4a, 4b, steht jeweils mit einer in der Figur nicht näher dargestellten, zum Bremssystem gehörenden Radbremse, beispielsweise einer Scheibenbremse oder Trommelbremse, in Wirkverbindung. Des Weiteren weist das Bremssystem des Fahrzeuges 1 Bremszylinder 6a, 6b, 7a, 7b auf, mittels denen die Radbremsen betätigbar sind und somit auf die Räder 3a, 3b, 4a, 4b unabhängig von den anderen Rädern eine Bremskraft ausgeübt werden kann. Bei dem Bremssystem handelt es sich in diesem Ausführungsbeispiel um ein pneumatisch betriebenes Bremssystem, die Bremszylinder 6a, 6b, 7a, 7b sind über Druckluft betätigbar.

Das ABS-Bremssystem umfasst ein elektronisches ABS-Steuergerät 2. Mit dem ABS-Steuergerät 2 elektrisch verbunden sind vier Druckmodulatoren 9, von denen jeweils ein Druckmodulator 9 einem Bremszylinder 6a, 6b, 7a, 7b zugewiesen ist. Der jeweilige Druckmodulator 9, hier ein Magnetregelventil, ist unabhängig von den anderen Druckmodulatoren durch das ABS-Steuergerät 2 zur Ausübung des Funktionen Druckaufbau-Druckhaltung-Druckabbau in dem jeweiligen zugeordneten Bremszylinder 6a, 6b, 7a, 7b ansteuerbar.

Des Weiteren weist das ABS-Bremssystem für jeweils ein Rad 3a, 3b, 4a, 4b einen Radsensor 10 auf, durch den mittels eines in dem jeweiligen Rad 3a, 3b, 4a, 4b angebrachten Polrades induktiv die Radgeschwindigkeit messbar ist. Die vier Radsensoren 10 sind mit dem ABS-Steuergerät 2 über Steuerleitungen elektrisch verbunden.

Die Druckluftversorgung der Bremszylinder 6a, 6b der Vorderachse und der Bremszylinder 7a, 7b der Hinterachse wird durch zwei in der Fig. 1 nicht näher dargestellten Bremskreise des Bremssystems bewirkt. Der erste Bremskreis ist dabei an die Bremszylinder 6a, 6b der Vorderräder 3a, 3b angeschlossen, der zweite Bremskreis an die Bremszylinder 7a, 7b der Hinterräder 4a, 4b.

Eine in Fig. 2 gezeigte zweite Ausführungsform eines Fahrzeuges 1' mit einer ABS-Bremssystem entspricht im Wesentlichen der ersten Ausführungsform, unterscheidet sich aber dadurch, dass neben einer ersten Hinterachse eine zweite Hinterachse vorgesehen ist. Neben Vorderrädern 3a', 3b', die auf einer gemeinsamen Vorderachse angeordnet sind, weist das Fahrzeug damit zwei Hinterräder 4a', 4b', die auf der ersten Hinterachse, und zwei weitere Hinterräder 5a', 5b' die auf der zweiten Hinterachse angeordnet sind. Analog dem Bremssystem der ersten Ausführungsform umfasst das Bremssystem der zweiten Ausführungsform für jedes einzelne Rad 3a', 3b', 4a', 4b', 5a', 5b' eine Radbremse, Bremszylinder 6a', 6b', 7a', 7b', 8a', 8b', und Druckmodulatoren 9, wobei die Druckmodulatoren 9 über eine elektrische Verbindung mit einem elektronischen Steuergerät 2' der ABS-Bremssystem verbunden sind und über diese entsprechend der ersten Ausführungsform steuerbar sind. Ebenfalls analog der ersten Ausführungsform umfasst die ABS-Bremssystem der zweiten Ausführungsform sechs Radsensoren 10, die über in den Rädern 3a', 3b', 4a', 4b', 5a', 5b' angeordnete Polräder 11 induktiv die jeweilige Radgeschwindigkeit messen, und elektrisch mit dem ABS-Steuergerät 2a verbunden sind. Andere Arten der Messung der Radgeschwindigkeit sind ebenfalls möglich.

Das Bremssystem ist als pneumatisches Bremssystem ausgebildet. Die Bremszylinder 6a', 6b' der Vorderräder 3a', 3b' sind an einem ersten Bremskreis angeschlossen, die Bremszylinder 7a', 7b', 8a', 8b' der Hinterräder 4a', 4b', 5a', 5b' an einem zweiten Bremskreis des Bremssystems.

Die ABS-Steuergeräte 2, 2' der beiden Ausführungsformen eines Fahrzeuges 1, 1' sind derart eingerichtet, dass sie ein erfindungsgemäßes ABS-Regelverfahren durchführen, wie weiter unten noch ausführlicher erläutert wird.

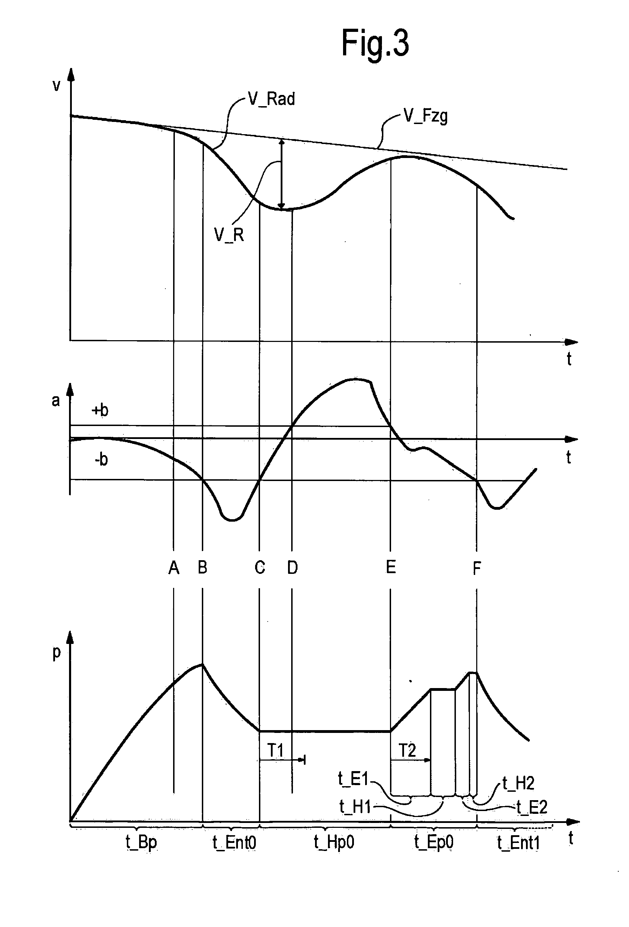

Fig. 3 zeigt in drei Diagrammen das Prinzip einer Ausführungsform eines erfindungsgemäßen ABS-Regelverfahrens. Im ersten Diagramm dargestellt sind die Radgeschwindigkeit v_Rad und die Fahrzeuggeschwindigkeit v_Fzg, jeweils in Abhängigkeit der Zeit t. Im zweiten Diagramm dargestellt ist die Radumfangsbeschleunigung a in Abhängigkeit der Zeit t. Im dritten Diagramm dargestellt ist der Druck p in einem Radbremszylinder in Abhängigkeit der Zeit t.

Die Bremsung der Fahrzeugs wird eingeleitet mit einer Bremsphase t_Bp, in der der Druck p im Radbremszylinder erhöht wird. Mit steigendem Bremsdruck p wird das Rad zunehmend verzögert bzw. abgebremst. An einem Punkt A übersteigt die Abbremsung des Rades einen Wert, der physikalisch von der Fahrzeugabbremsung nicht überschritten werden kann.

Die negative Radumfangsbeschleunigung, also die Radverzögerung, unterschreitet an einem Punkt B einen Verzögerungsschwellenwert -b. Vorzugsweise ist der Verzögerungsschwellenwert -b derart gewählt, dass das Rad an diesem Punkt seine maximale Bremskraft erreicht hat. Jede weitere Erhöhung des Bremsdruckes p führt nicht zu weiterer Erhöhung der Abbremsung des Fahrzeuges, sondern ausschließlich zu einer Erhöhung der Radverzögerung.

Ab dem Punkt B wird in einer ersten Entlüftungsphase t_Ent0 der Bremsdruck p schnell vermindert. Die Abbremsung des Rades nimmt ab.

An einem Punkt C übersteigt die Radverzögerung den Verzögerungsschwellenwert -b. In einer ersten Haltephase t_Hp0 wird nun der Bremsdruck p für eine definierte Zeit konstant gehalten. Wird innerhalb einer Zeit T1 ein +b-Schwellenwert, also eine positive Radbeschleunigungsschwelle, nicht erreicht (Punkt D), so kann eine weitere Senkung des Bremsdruckes p erfolgen.

An einem Punkt E wird der +b-Schwellenwert unterschritten. Das Unterschreiten des +b-Schwellenwertes markiert in dieser Darstellung auch das Ende der Haltephase t_Hp0. Allerdings ist es ebenfalls möglich, dass sich das Ende der Haltephase t_Hp0 nicht mit dem Unterschreiten des +b-Schwellenwertes überdeckt.

Nach der ersten Haltephase t_Hp0 schließt sich eine erste Einsteuerphase t_Ep0 an. In dieser Einsteuerphase t_Ep0 wird der Bremsdruck p steil eingesteuert. Die Einsteuerphase t_Ep0 unterteilt sich dabei in vier Abschnitte: an eine erste Einsteuerzeit t_E1, in der der Bremsdruck p für eine Zeit T2 steil eingesteuert wird, schließt sich eine erste Haltezeit t_H1 an, in der der Bremsdruck p konstant gehalten wird. Nachfolgend der ersten Haltezeit t_H1 folgt eine zweite Einsteuerzeit t_E2, in der Bremsdruck p wieder erhöht wird, und danach wiederum eine Haltzeit t_H2, in der der Bremsdruck p konstant gehalten wird. Das abwechselnde Einsteuern und Halten des Bremsdruckes p wird als "Pulsen" bezeichnet. Die Anzahl der Einsteuerzeiten und Haltezeiten sowie deren Länge können variieren. Anstelle eines "Pulsens" kann auch eine stetige Druckeinsteuerung erfolgen.

Die Erhöhung des Bremsdruckes p in der ersten Einsteuerphase t_Ep0 führt dazu, dass erneut der Verzögerungsschwellenwert -b an einem Punkt F unterschritten wird. Die erste Einsteuerphase t_Ep0 wird beendet, was gleichzeitig auch das Ende des ersten Regelzyklus des ABS-Regelverfahrens, wobei sich ein solcher Zyklus aus einer Entlüftungsphase t_Ent0, Haltephase t_Hp0 und Einsteuerphase t_Ep0 zusammensetzt, markiert. Es folgt bei Bedarf, wie in den Diagrammen der Fig. 3 angedeutet, ein zweiter Regelzyklus. Der zweite Regelzyklus wird wiederum eingeleitet durch eine Entlüftungsphase, hier eine zweite Entlüftungsphase t_Ent1. Für den zweiten Regelzyklus können vorher genannte ABS-Regelparameter variiert werden, um das Bremsverhalten des Fahrzeuges zu optimieren. Weitere Regelzyklen können sich anschließen.

Gemäß einer Ausführungsform eines erfindungsgemäßen ABS-Regelverfahrens für ein Fahrzeug, hier für ein Fahrzeug 1 mit mindestens einem Rad, hier Rädern 3a, 3b, mit einer Radbremse, wird mindestens ein ABS-Regelparameter derart verändert, das eine dem Rad 3a, 3b, zugeordnete Radregelamplitude (V_R) gegenüber einer durch unveränderte ABS-Regelparameter hervorgerufenen Radregelamplitude reduziert ist, wenn ein Reibwert zwischen dem Rad 3a, 3b, und einem Raduntergrund einen Reibschwellenwert erreicht oder unterschreitet.

Dabei wird die durch unveränderte ABS-Regelparameter hervorgerufene Radregelamplitude um vorzugsweise mindestens 50% reduziert. Die Radregelamplitude V_R ist bestimmt durch den Abstand zwischen der Fahrzeuggeschwindigkeit V_Fzg und der Radgeschwindigkeit V_Rad im ersten Maximum der Differenz der beiden Funktionen.

Der mindestens eine ABS-Regelparameter wird in diesem Ausführungsbeispiel verändert, wenn die Fahrzeuggeschwindigkeit (V_Fzg) des Fahrzeugs kleiner gleich 20km/h und der Reibwert kleiner gleich einem Reibschwellenwert von 0,2 ist, oder wenn die Fahrzeuggeschwindigkeit (V_Fzg) des Fahrzeugs kleiner gleich 12km/h und der Reibwert kleiner gleich einem Reibschwellenwert von 0,3 ist. Um eine Erfüllung der Bedingung zu erkennen, werden die jeweiligen aktuellen Reibwerte und Fahrzeuggeschwindigkeit (V_Fzg) mit den angegebenen Reibschwellenwerten und Fahrzeuggeschwindigkeitsschwellenwerten verglichen. Des Weiteren muss für eine Änderung des mindestens einen ABS-Regelparameters die zusätzliche Bedingung vorliegen, dass kein Split vorliegt, also zwischen den Reibwerten zwischen Raduntergrund und linksseitigem Rad 3a und Raduntergrund und rechtsseitigem Rad 3b kein merklicher Unterschied vorliegt.

Die angegebenen Reibschwellenwerte werden insbesondere auf glattem Fahrzeuguntergrund, wie beispielsweise Eis, erreicht. Alternativ können auch mehrere Reibschwellenwerte vorgesehen werden, in Verbindung jeweils mit einer Änderung der ABS-Regelparameter. Entsprechend können auch die Fahrzeuggeschwindigkeitsschwellenwerte variiert werden.

In einer Variante wird die erfindungsgemäße Maßnahme ebenfalls eingeleitet, wenn ein Kreisausfall des zweiten Bremskreises vorliegt, die Radbremsen der Hinterräder 4a, 4b also nicht mehr bremsbar sind. Hierfür wird direkt die Information verwendet, ob ein Kreisausfall vorliegt. Eine solche Information kann beispielsweise durch das Bremssystem, das den Kreisausfall erkannt hat, zur Verfügung gestellt werden. Liegt ein Kreisausfall vor, wird der mindestens eine ABS-Regelparameter in der oben beschriebenen Weise zur Reduzierung der Radregelamplitude V_R verändert, also die "Komfortfunktion" aktiviert. Dies findet insbesondere unabhängig von den Größen Reibwert und Fahrzeuggeschwindigkeit statt.

In einer weiteren Variante wird die erfindungsgemäße Maßnahme ebenfalls eingeleitet, wenn eine Teilbremsung vorliegt, also eine in der Regel vom Fahrer vorgegebene Solldruckvorgabe unterhalb eines Bremsdruckschwellenwertes liegt. Beim Erreichen und Überschreiten des Schwellenwertes wird die Maßnahme deaktiviert. Der Bremsdruckschwellenwert kann, je nach Wunsch, unter welcher Bedingung die "Komfortfunktion" einsetzten soll, individuell gewählt sein.

Die ABS-Regelparameter, die beim Unterschreiten des Reibschwellenwertes verändert werden, sind in diesem Ausführungsbeispiele der -b-Schwellenwert, die Haltephase t_Hp0, die Haltezeit t_H1, t_H2 und/oder die Einsteuerzeit t_E1, t_E2. Wird der Radverzögerungsschwellenwert überschritten, so wird der -b-Schwellenwert verkleinert, die Haltezeiten t_H1 und/oder t_H2 erhöht, und die Einsteuerzeiten t_E1 und/oder t_E2 erniedrigt. Ist in der ersten Einsteuerphase t_Ep0 ein weiteres Pulsen mit weiteren Einsteuerzeiten notwendig, so sind diese Einsteuerzeiten ebenfalls erniedrigt. Zusätzlich ist es möglich, auch die Haltephase t_Hp0 zu erhöhen. Die Erniedrigung bzw. Erhöhung bezieht sich dabei auf die Werte der ABS-Regelparameter, die vor der Erfüllung zumindest einer der oben genannten Bedingungen vorlagen. In diesem Ausführungsbeispiel wird die derartige Änderung der ABS-Regelparameter auch für möglicherweise weitere folgenden Regelzyklen beibehalten. Alternativ ist es aber ebenfalls möglich, in den folgenden Regelzyklen die vorherigen ABS-Regelparameter einzunehmen.

Ist in einem vorhergehenden Regelungszyklus in der Einsteuerphase t_Ep0 mit mindestens vier Einsteuerzeiten der Bremsdruck p im Bremszylinder erhöht worden, so wird mindestens eine Einsteuerzeit t_E1, t_E2 für den nächsten Regelungszyklus erhöht. Durch diese Maßnahme soll verhindert werden, dass unzureichend Bremsdruck in der Einsteuerphase t_Ep0 in den Bremszylinder eingesteuert wird, so dass die Einsteuerphase t_Ep0 unvorteilhaft lang wird. Diese Maßnahme gilt ebenso für weitere folgende Regelzyklen, falls genannte Bedingungen vorliegen.

In diesem Ausführungsbeispiel wird für ein Zugfahrzeug wie das Fahrzeug 1 für die Reduzierung der Radregelamplitude V_R der -b-Schwellenwert von einem Wert größer 1,3g auf einen Wert kleiner gleich 1,2g, hier gleich 0,6g gesetzt. Die erste Haltephase t_Hp0 wird von einem Wert < 90ms auf einen Wert > = 100ms gesetzt, hier = 180ms. Eine minimale Einsteuerzeit t_E2 wird von einem Wert größer 12ms auf einen Wert kleiner gleich 10ms, hier gleich 6ms gesetzt. Die Haltezeiten t_H1, t_H2 werden um 200% erhöht. Durch diese Maßnahmen wird eine deutliche Reduzierung der Radregelamplitude V_R erreicht, in diesem Fall von etwa 50 %.

Das Steuergerät 2 des ABS-Bremssystems des Fahrzeuges 1 ist derart eingerichtet, dass es oben beschriebene Ausführungsform eines erfindungsgemäßen ABS-Regelverfahrens ausführt. Insbesondere ist das Steuergerät 2 derart eingerichtet, dass die beiden Vorderräder 3a, 3b gemäß dem oben beschriebenen ABS-Regelungsverfahren gesteuert werden, also die ABS-Regelparameter bei Erfüllung zumindest einer der genannten Bedingungen zur Reduzierung der Radregelamplitude geeignet verändert werden. Insbesondere durch die erfindungsgemäße ABS-Regelung der Vorderräder 3a, 3b kann ein unangenehmes Schütteln bei einer Teilbremsung oder gegen Bremsende bei einer vollständigen Abbremsung, oder auch bei einem Kreisausfall reduziert werden.

Für die ABS-Regelung der Hinterräder 4a, 4b des Fahrzeugs 1 werden die ABS-Regelparameter bei einem Überschreiten des Radverzögerungsgrenzwertes nicht verändert. Die "normale" ABS-Regelung wird beibehalten. Allerdings werden die Hinterräder 4a, 4b asynchron geregelt, wenn die genannten Bedingungen erfüllt sind. In einer Einsteuerphase t_Ep0 des Bremszylinders 7b des Rades 4b wird der Bremszylinder 7a des Hinterrades 4a in eine Haltezeit t_H1 gehalten, bis die Einsteuerphase t_Ep0 und/oder eine auf die Einsteuerphase t_Ep0 folgende Entlüftungsphase t_Ent1 des Bremszylinders 7b abgeschlossen ist, in diesem Falle die Entlüftungsphase t_Ent1 abgeschlossen ist. Umgekehrt wird in einer Einsteuerphase des Bremszylinders 7a des Rades 4a der Bremszylinder 7b des Rades 4b in eine Haltezeit t_H1 gehalten, bis die Einsteuerphase t_Ep0 und/oder eine auf die Einsteuerphase t_Ep0 folgende Entlüftungsphase t_Ent1 des Bremszylinders 7a abgeschlossen ist. Dies gilt auch für weitere Regelzyklen. Überschreitet aber die Einsteuerphase t_Ep0 (oder gegebenenfalls eine spätere Einsteuerphase) einen vorgegebenen zeitlichen Einsteuerschwellenwert, so wird auch in den sich in der Haltezeit t_H1 befindende Bremszylinder weiter Druck eingesteuert. In diesem Ausführungsbeispiel liegt der Einsteuerschwellwert bei einem Wert von größer gleich 400 ms, hier etwa 400ms. Durch diese asynchrone Regelung der Räder 4a, 4b an der Hinterachse des Fahrzeuges 1 kann ebenfalls ein "Schütteln" des Fahrzeuges 1 während einer Bremsung reduziert werden. Alternativ kann auch für die Bremszylinder 7a, 7b der Hinterräder 4a, 4b eine stetige Druckeinsteuerung anstatt eines "Pulsens" vorgesehen sein.

In einer alternativen Ausführungsform können die Hinterräder 4a, 4b zusätzlich gemäß dem erfindungsgemäßen ABS-Regelverfahren, wie oben beschrieben, gesteuert werden.

Bezüglich des zweiten Zugfahrzeugs 1' ist das elektronische Steuergerät 2' ähnlich dem elektronischen Steuergerät 2 eingerichtet. Die Vorderräder 3a', 3b' werden entsprechend den Vorderrädern 3a, 3b, die Hinterräder 4a', 4b', 5a', 5b' entsprechend den Hinterrädern 4a, 4b des Zugfahrzeugs 1 gesteuert. Insbesondere werden die Hinterräder 4a', 4b' sowie die Hinterräder 5a', 5b' paarweise asynchron, wie oben beschrieben, geregelt. Des Weiteren ist das Steuergerät 2' derart eingerichtet, dass es auch im Falle eines Kreisausfalls des Bremskreises des Fahrzeugs 1', dem die Hinterradbremszylinder 7a', 7b', 8a', 8b' zugeordnet sind, für die Vorderräder 3a', 3b' die ABS-Regelparameter wie oben beschrieben zur Reduzierung der Radregelamplitude verändert.

Die Erfindung ist nicht beschränkt auf das hier beschriebene Zwei-Achs-Fahrzeug 1 mit 4S/4M (= Vier Sensoren 10 / Vier Modulatoren 9) und Drei-Achs-Fahrzeug 1' mit 6S/6M. Eine Übertragung auf Fahrzeuge mit 4S/3M, 6S/5M, 6S/4M usw. ist ebenfalls möglich.

## Patentansprüche

1. ABS - Regelverfahren für ein Fahrzeug (1, 1') mit mindestens einem Rad (3a, 3b, 3a', 3b') mit einer Radbremse, gemäß dem mindestens ein ABS-Regelparameter derart verändert wird, das eine dem Rad (3a, 3b, 3a', 3b') zugeordnete Radregelamplitude (V_R) gegenüber einer durch unveränderte ABS-Regelparameter hervorgerufenen Radregelamplitude reduziert ist, wenn ein Reibwert zwischen dem Rad (3a, 3b, 3a', 3b') und einem Raduntergrund einen Reibschwellenwert erreicht oder unterschreitet;
**dadurch gekennzeichnet, dass**
bei einem Erreichen oder Unterschreiten des Reibschwellenwertes die ABS-Regelparameter der Hinterräder (4a, 4b; 5a, 5b) asynchron geregelt werden.

2. Verfahren nach Anspruch 1, wobei in mindestens einem ABS-Regelzyklus nachfolgend einer eine Bremsung des Fahrzeugs einleitenden Bremsphase (t_Bp) oder einer Einsteuerphase (t_Ep0), in der jeweils der Druck in einem die Bremskraft des Rades (3a, 3b, 3a', 3b') steuernden Bremszylinder (6a, 6b, 6a', 6b') erhöht wird, ab Erreichen eines Verzögerungsschwellenwertes (-b) in dem Bremszylinder (6a, 6b, 6a', 6b') in einer Entlüftungsphase (t_Ent0, t_Ent1) der Druck gesenkt wird, und nach der Entlüftungsphase (t_Ent0) der Druck im Bremszylinder (6a, 6b, 6a', 6b') in einer Haltephase (t_Hp0) konstant gehalten wird, und nach der Haltephase (t_Hp0) in einer Einsteuerphase (t_Ep0) mit mindestens einer Einsteuerzeit (t_E1, t_E2) der Druck im Bremszylinder erhöht und mit mindestens einer Haltezeit (t_H1, t_H2) konstant gehalten wird, wobei beim Eintritt der mindestens einen Bedingung der Verzögerungsschwellenwert (-b) verkleinert wird, die Haltephase (t_Hp0) erhöht wird, die mindestens eine Haltezeit (t_H1, t_H2) erhöht wird und/oder die mindestens eine Einsteuerzeit (t_E1, t_E2) erniedrigt wird.

3. Verfahren nach einem der vorhergehenden Ansprüche, wobei der mindestens eine ABS-Regelparameter derart verändert wird, dass die Radregelamplitude mindestens um 20%, vorzugsweise mindestens um 50% gegenüber der durch unveränderte ABS-Regelparameter hervorgerufenen Radregelamplitude reduziert ist

4. Verfahren nach einem der vorhergehenden Ansprüche, wobei der mindestens eine ABS-Regelparameter verändert wird, wenn ein Reibwert zwischen dem Rad und einem Raduntergrund kleiner gleich 0,3, vorzugsweise kleiner gleich 0,2 ist.

5. Verfahren nach einem der vorhergehenden Ansprüche, wobei der mindestens eine ABS-Regelparameter verändert wird, wenn eine Fahrzeuggeschwindigkeit (v_Fzg) des Fahrzeugs kleiner gleich 20km/h und der Reibwert kleiner gleich 0,2 ist, oder die Fahrzeuggeschwindigkeit (v_Fzg) des Fahrzeugs kleiner gleich 12km/h und der Reibwert kleiner gleich 0,3 ist.

6. Verfahren nach einem der vorhergehenden Ansprüche, wobei der mindestens eine ABS-Regelparameter verändert wird, wenn eine Fahrzeuggeschwindigkeit (v_Fzg) des Fahrzeugs kleiner gleich 20km/h und der Reibwert kleiner gleich 0,2 ist, die Fahrzeuggeschwindigkeit (v_Fzg) des Fahrzeugs kleiner gleich 12km/h und der Reibwert kleiner gleich 0,3 ist, und/oder kein Split vorliegt.

7. Verfahren nach einem der vorhergehenden Ansprüche, wobei der mindestens eine ABS-Regelparameter verändert wird, wenn ein Bremskreisausfall eines Bremskreises des Fahrzeuges, insbesondere ein Hinterachskreisausfall, vorliegt.

8. Verfahren nach einem der vorhergehenden Ansprüche, wobei in einer Einsteuerphase (t_Ep0) des ersten Bremszylinders (7a) ein zweiter Bremszylinder (7b) eines zweiten Rades (4b) des Fahrzeuges in einer Haltezeit (t_H1) gehalten wird, und der zweite Bremszylinder (7b) vorzugsweise so lange in der Haltezeit (t_H1) gehalten wird, bis die Einsteuerphase (t_Ep0) oder eine auf die Einsteuerphase (t_Ep0) folgende Entlüftungsphase (t_Ent1) des ersten Bremszylinders (7a) abgeschlossen ist, oder bis die Einsteuerphase (t_Ep0) des ersten Bremszylinders (7a) einen vorgegebenen zeitlichen Einsteuerschwellenwert überschritten hat, und umgekehrt.

9. Verfahren nach einem der vorhergehenden Ansprüche, wobei mindestens eine Einsteuerzeit (t_E1, t_E2) für einen nächsten Regelungszyklus erhöht wird, wenn in einem vorhergehenden Regelungszyklus in der Einsteuerphase (t_Ep0) mit mindestens zwei, vorzugsweise mit mindestens vier Einsteuerzeiten der Druck im Bremszylinder erhöht wurde.

10. Verfahren nach einem der vorhergehenden Ansprüche, wobei der Verzögerungsschwellenwert (-b) kleiner gleich 1,2g, vorzugsweise kleiner gleich 0,8g, besonders vorzugsweise kleiner gleich 0,6g gesetzt wird.

11. Verfahren nach einem der vorhergehenden Ansprüche, wobei die Haltephase (t_Hp0) größer gleich 100ms, vorzugsweise größer gleich 120ms, vorzugsweise größer gleich 180ms gesetzt wird.

12. Verfahren nach einem der vorhergehenden Ansprüche, wobei die mindestens eine Einsteuerzeit (t_E1, t_E2) kleiner gleich 10ms, vorzugsweise kleiner gleich 6ms gesetzt wird.

13. ABS-Regelverfahren für ein Fahrzeug mit mindestens einem Vorderrad (3a, 3b, 3a', 3b') mit einer Vorderradbremse und mindestens zwei auf einer gemeinsamen Hinterachse des Fahrzeugs angeordneten Hinterrädern (4a, 4b, 4a', 4b', 5a', 5b') mit jeweils einer Hinterradbremse, sowie einem die Bremskraft des mindestens einen Vorderrades (3a, 3b, 3a', 3b') steuernden Vorderradbremszylinder (6a, 6b, 6a', 6b') und einem die Bremskraft des jeweiligen Hinterrades (4a, 4b, 4a', 4b', 5a', 5b') steuernden ersten Hinterradbremszylinder (7a, 7a', 8a') und zweiten Hinterradbremszylinder (7b, 7b', 8b'), wobei der mindestens eine Vorderradbremszylinder (6a, 6b, 6a', 6b') nach einem Verfahren gemäß einem der Ansprüche 1 bis 12 geregelt wird, und in einer Einsteuerphase (t_Ent1) des ersten Hinterradbremszylinders (7a, 7a', 8a') der zweite Hinterradbremszylinder (7b, 7b', 8b') in einer Haltezeit (t_H1) gehalten wird, und der zweite Hinterradbremszylinder (7b, 7b', 8b') vorzugsweise so lange in der Haltezeit (t_H1) gehalten wird, bis die Einsteuerphase (t_Ep0) oder eine auf die Einsteuerphase (t_Ep0) folgende Entlüftungsphase (t_Ent1) des ersten Hinterradbremszylinders (7a, 7a', 8a') abgeschlossen ist, oder bis die Einsteuerphase (t_Ep0) des Hinterradbremszylinders (7a, 7a', 8a') einen vorgegebenen zeitlichen Einsteuerschwellenwert überschritten hat, und umgekehrt.

14. Fahrzeug (1, 1'), mindestens umfassend ein ABS-Bremssystem, ein Rad (3a, 3b, 4a, 4b, 3a', 3b', 4a', 4b', 5a', 5b') mit einer Radbremse und einen die Bremskraft des Rades (3a, 3b, 4a, 4b, 3a', 3b', 4a', 4b', 5a', 5b') steuernden Bremszylinder (6a, 6b, 7a, 7b, 6a', 6b', 7a', 7b', 8a', 8b'), wobei das ABS-Bremssystem zur Durchführung eines Verfahrens nach einem der Ansprüche 1 bis 13 eingerichtet ist.

15. Fahrzeug nach Anspruch 14, wobei das ABS-Bremssystem ein elektronisches ABS-Steuergerät (2, 2') aufweist, mittels dem der Bremszylinder (6a, 6b, 7a, 7b, 6a', 6b', 7a', 7b', 8a', 8b') steuerbar ist, und das ABS-Steuergerät (2, 2') zur Durchführung eines Verfahrens nach einem der Ansprüche 1 bis 13 eingerichtet ist.

16. Fahrzeug nach Anspruch 14 oder 15, wobei das mindestens eine Rad ein auf einer Vorderachse des Fahrzeugs (1, 1') angeordnetes Vorderrad (3a, 3b, 3a', 3b') ist und der Bremszylinder ein Vorderradbremszylinder (6a, 6b, 6a', 6b') ist.

17. Fahrzeug nach Anspruch 16, zusätzlich umfassend zwei auf einer gemeinsamen Hinterachse des Fahrzeugs angeordnete Hinterräder (4a, 4b, 4a', 4b', 5a', 5b') mit jeweils einer Hinterradbremse, sowie einen die Bremskraft des jeweiligen Hinterrades (4a, 4b, 4a', 4b', 5a', 5b') steuernden ersten Hinterradbremszylinder (7a, 7a', 8a') und zweiten Hinterradbremszylinder (7b, 7b', 8b').

## Claims

1. ABS regulation method for a vehicle (1, 1') having at least one wheel (3a, 3b, 3a', 3b') with a wheel brake, in which method at least one ABS regulation parameter is varied such that a wheel regulation amplitude (V_R) associated with the wheel (3a, 3b, 3a', 3b') is reduced, in relation to a wheel regulation amplitude effected by unchanged ABS regulation parameters, if a friction coefficient between the wheel (3a, 3b, 3a', 3b') and a road surface beneath the wheel reaches or undershoots a friction coefficient threshold;
**characterized in that**
in the event of the friction coefficient threshold being reached or undershot, the ABS regulation parameters of the rear wheels (4a, 4b; 5a, 5b) are regulated asynchronously.

2. Method according to Claim 1, wherein, in at least one ABS regulation cycle, following a braking phase (t_Bp) which initiates a braking operation of the vehicle, or a feed-in phase (t_Ep0) in which in each case the pressure in a brake cylinder (6a, 6b, 6a', 6b') which controls the braking force of the wheel (3a, 3b, 3a', 3b') is increased, from the point at which a deceleration threshold value (-b) is reached, the pressure in the brake cylinder (6a, 6b, 6a', 6b') is reduced in a ventilation phase (t_Ent0, t_Ent1), and after the ventilation phase (t_Ent0), the pressure in the brake cylinder (6a, 6b, 6a', 6b') is held constant in a holding phase (t_Hp0), and after the holding phase (t_Hp0), in a feed-in phase (t_Ep0) with at least one feed-in period (t_E1, t_E2), the pressure in the brake cylinder is increased and is held constant with at least one holding period (t_H1, t_H2), wherein, upon the at least one condition being met, the deceleration threshold value (-b) is reduced, the holding phase (t_Hp0) is increased, the at least one holding period (t_H1, t_H2) is increased and/or the at least one feed-in period (t_E1, t_E2) is reduced.

3. Method according to one of the preceding claims, wherein the at least one ABS regulation parameter is varied such that the wheel regulation amplitude is reduced at least by 20%, preferably at least by 50%, in relation to the wheel regulation amplitude effected by unchanged ABS regulation parameters.

4. Method according to one of the preceding claims, wherein the at least one ABS regulation parameter is varied if a friction coefficient between the wheel and a road surface beneath the wheel is less than or equal to 0.3, preferably less than or equal to 0.2.

5. Method according to one of the preceding claims, wherein the at least one ABS regulation parameter is varied if a vehicle speed (v_Fzg) of the vehicle is less than or equal to 20 km/h and the friction coefficient is less than or equal to 0.2, or the vehicle speed (v_Fzg) of the vehicle is less than or equal to 12 km/h and the friction coefficient is less than or equal to 0.3.

6. Method according to one of the preceding claims, wherein the at least one ABS regulation parameter is varied if a vehicle speed (v_Fzg) of the vehicle is less than or equal to 20 km/h and the friction coefficient is less than or equal to 0.2, the vehicle speed (v_Fzg) of the vehicle is less than or equal to 12 km/h and the friction coefficient is less than or equal to 0.3, and/or there is no split.

7. Method according to one of the preceding claims, wherein the at least one ABS regulation parameter is varied if a brake circuit failure of a brake circuit of the vehicle, in particular a rear-axle circuit failure, occurs.

8. Method according to one of the preceding claims, wherein, in a feed-in phase (t_Ep0) of the first brake cylinder (7a), a second brake cylinder (7b) of a second wheel (4b) of the vehicle is held in a holding period (t_H1), and the second brake cylinder (7b) is preferably held in the holding period (t_H1) until the feed-in phase (t_Ep0) or a ventilation phase (t_Ent1), which follows the feed-in phase (t_Ep0), of the first brake cylinder (7a) has come to an end, or until the feed-in phase (t_Ep0) of the first brake cylinder (7a) has exceeded a predefined temporal feed-in threshold value, and vice versa.

9. Method according to one of the preceding claims, wherein at least one feed-in period (t_E1, t_E2) for a subsequent regulation cycle is increased if, in a preceding regulation cycle, the pressure in the brake cylinder has been increased in the feed-in phase (t_Ep0) with at least two, preferably with at least four feed-in periods.

10. Method according to one of the preceding claims, wherein the deceleration threshold value (-b) is set to less than or equal to 1.2 g, preferably less than or equal to 0.8 g, particularly preferably less than or equal to 0.6 g.

11. Method according to one of the preceding claims, wherein the holding phase (t_Hp0) is set to greater than or equal to 100 ms, preferably greater than or equal to 120 ms, preferably greater than or equal to 180 ms.

12. Method according to one of the preceding claims, wherein the at least one feed-in period (t_E1, t_E2) is set to less than or equal to 10 ms, preferably less than or equal to 6 ms.

13. ABS regulation method for a vehicle having at least one front wheel (3a, 3b, 3a', 3b') with a front-wheel brake, and having at least two rear wheels (4a, 4b, 4a', 4b', 5a', 5b') which are arranged on a common rear axle of the vehicle and have in each case one rear-wheel brake, and also having a front-wheel brake cylinder (6a, 6b, 6a', 6b'), which controls the braking force of the at least one front wheel (3a, 3b, 3a', 3b'), and a first rear-wheel brake cylinder (7a, 7a', 8a') and second rear-wheel brake cylinder (7b, 7b', 8b'), which control the braking force of the respective rear wheel (4a, 4b, 4a', 4b', 5a', 5b'), wherein the at least one front-wheel brake cylinder (6a, 6b, 6a', 6b') is regulated in accordance with a method according to one of Claims 1 to 12, and in a feed-in phase (t_Ent1) of the first rear-wheel brake cylinder (7a, 7a', 8a'), the second rear-wheel brake cylinder (7b, 7b', 8b') is held in a holding period (t_H1), and the second rear-wheel brake cylinder (7b, 7b', 8b') is preferably held in the holding period (t_H1) until the feed-in phase (t_Ep0) or a ventilation phase (t_Ent1), which follows the feed-in phase (t_Ep0), of the first rear-wheel brake cylinder (7a, 7a', 8a') has come to an end, or until the feed-in phase (t_Ep0) of the rear-wheel brake cylinder (7a, 7a', 8a') has exceeded a predefined temporal feed-in threshold value, and vice versa.

14. Vehicle (1, 1'), at least comprising an ABS brake system, a wheel (3a, 3b, 4a, 4b, 3a', 3b', 4a', 4b', 5a', 5b') with a wheel brake and a brake cylinder (6a, 6b, 7a, 7b, 6a', 6b', 7a', 7b', 8a', 8b') which controls the braking force of the wheel (3a, 3b, 4a, 4b, 3a', 3b', 4a', 4b', 5a', 5b'), wherein the ABS brake system is set up for carrying out a method according to one of Claims 1 to 13.

15. Vehicle according to Claim 14, wherein the ABS brake system has an electronic ABS control unit (2, 2') by means of which the brake cylinder (6a, 6b, 7a, 7b, 6a', 6b', 7a', 7b', 8a', 8b') can be controlled, and the ABS control unit (2, 2') is set up for carrying out a method according to one of Claims 1 to 13.

16. Vehicle according to Claim 14 or 15, wherein the at least one wheel is a front wheel (3a, 3b, 3a', 3b') arranged on a front axle of the vehicle (1, 1'), and the brake cylinder is a front-wheel brake cylinder (6a, 6b, 6a', 6b').

17. Vehicle according to Claim 16, additionally comprising two rear wheels (4a, 4b, 4a', 4b', 5a', 5b') which are arranged on a common rear axle of the vehicle and have in each case one rear-wheel brake, and comprising a first rear-wheel brake cylinder (7a, 7a', 8a') and second rear-wheel brake cylinder (7b, 7b', 8b') which control the braking force of the respective rear wheel (4a, 4b, 4a', 4b', 5a', 5b').

## Revendications

1. Procédé de régulation ABS (antipatinage) pour un véhicule (1, 1') présentant au moins une roue (3a, 3b, 3a', 3b') dotée d'un frein de roue, et dans lequel au moins un paramètre de régulation ABS est modifié de telle sorte que l'amplitude de régulation (V_R) associée à la roue (3a, 3b, 3a', 3b') soit réduite par rapport à une amplitude de régulation de roue provoquée par des paramètres de régulation ABS non modifiés lorsqu'une valeur du frottement entre la roue (3a, 3b, 3a', 3b') et le soubassement de la roue atteint ou devient inférieure à une valeur de seuil de frottement, **caractérisé en ce que**
lorsque la valeur de seuil de frottement est atteinte ou n'est plus atteinte, les paramètres de régulation ABS des roues arrière (4a, 4b; 5a, 5b) sont régulés de manière asynchrone.

2. Procédé selon la revendication 1, dans lequel dans au moins un cycle de régulation ABS, après une phase de freinage (t_Bp) qui introduit un freinage du véhicule ou une phase de commande (t_Ep0) dans laquelle la pression qui règne dans un cylindre de frein (6a, 6b, 6a', 6b') qui commande la force de freinage de la roue (3a, 3b, 3a', 3b') est augmentée, dès qu'une valeur de seuil de ralentissement (-b) est atteinte, la pression qui règne dans le cylindre de frein (6a, 6b, 6a', 6b') est abaissée dans une phase d'évacuation d'air (t_Ent0, t_Ent1), et après la phase d'évacuation d'air (t_Ent0), la pression qui règne dans le cylindre de frein (6a, 6b, 6a', 6b') est maintenue constante dans une phase de maintien (t_Hp0) et après la phase de maintien (t_Hp0), dans une phase de commande (t_Ep0) qui présente au moins un instant de commande (t_E1, t_E2), la pression qui règne dans le cylindre de frein est augmentée et est maintenue constante pendant au moins une durée de maintien (t_H1, t_H2), tandis que lorsque la ou les conditions prévalent, la valeur (-b) de seuil de ralentissement est abaissée, la phase de maintien (t_Hp0) est augmentée, la ou les durées de maintien (t_H1, t_H2) sont augmentées et/ou la ou les durées de commande (t_E1, t_E2) sont diminuées.

3. Procédé selon l'une des revendications précédentes, dans lequel le ou les paramètres de régulation ABS sont modifiés de telle sorte que l'amplitude de régulation de roue soit réduite d'au moins 20 % et de préférence d'au moins 50 % par rapport à l'amplitude de régulation de roue provoquée par des paramètres de régulation ABS inchangés.

4. Procédé selon l'une des revendications précédentes, dans lequel le ou les paramètres de régulation ABS sont modifiés lorsque le coefficient de frottement entre la roue et le soubassement de la roue est intérieur ou égal à 0,3 et de préférence inférieur ou égal à 0,2.

5. Procédé selon l'une des revendications précédentes, dans lequel le ou les paramètres de régulation ABS sont modifiés lorsque la vitesse (v_Fzg) du véhicule est inférieure ou égale à 20 km/h et le coefficient de frottement inférieur ou égal à 0,2 ou lorsque la vitesse (v_Fzg) du véhicule est inférieure ou égale à 12 km/h et le coefficient de frottement inférieur ou égal à 0,3.

6. Procédé selon l'une des revendications précédentes, dans lequel le ou les paramètres de régulation ABS sont modifiés lorsque la vitesse (v_Fzg) du véhicule est inférieure ou égale à 20 km/h et le coefficient de frottement inférieur ou égal à 0,2 ou lorsque la vitesse (v_Fzg) du véhicule est inférieure ou égale à 12 km/h et le coefficient de frottement inférieur ou égal à 0,3 et/ou si un patinage survient.

7. Procédé selon l'une des revendications précédentes, dans lequel le ou les paramètres de régulation ABS sont modifiés lorsqu'une défaillance du circuit de freinage du véhicule et en particulier une défaillance du circuit de l'essieu arrière surviennent.

8. Procédé selon l'une des revendications précédentes, dans lequel, au cours d'une phase de commande (t_Ep0) du premier cylindre de frein (7a), un deuxième cylindre de frein (7b) d'une deuxième roue (4b) du véhicule est maintenu pendant une durée de maintien (t_H1) et le deuxième cylindre de frein (7b) est de préférence maintenu pendant la durée de maintien (t_H1) au moins jusqu'à ce que la phase de commande (t_Ep0) ou une phase d'évacuation d'air (t_Ent1) qui suit la phase de commande (t_Ep0) du premier cylindre de frein (7a) est terminée ou jusqu'à ce que la phase de commande (t_Ep0) du premier cylindre de frein (7a) a dépassé une valeur temporelle de seuil prédéterminée de commande et inversement.

9. Procédé selon l'une des revendications précédentes, dans lequel au moins une durée de commande (t_E1, t_E2) pour un cycle de régulation suivant est augmentée si dans un cycle de régulation précédent, la pression dans le cylindre de frein a été augmentée pendant au moins deux et de préférence au moins quatre durées de commande au cours de la phase de commande (t_Ep0) .

10. Procédé selon l'une des revendications précédentes, dans lequel la valeur de seuil de ralentissement (-b) est fixée à 1,2 g ou moins, de préférence à 0,8 g ou moins et de façon particulièrement préférable à 0,6 g ou moins.

11. Procédé selon l'une des revendications précédentes, dans lequel la phase de maintien (t_Hp0) est fixée à 100 ms, de préférence à 120 ms ou plus et mieux à 180 ms ou plus.

12. Procédé selon l'une des revendications précédentes, dans lequel la ou les durées de commande (t_E1, t_E2) sont fixées à 10 ms ou moins et de préférence à 6 ms ou moins.

13. Procédé de régulation ABS pour un véhicule qui présente au moins une roue avant (3a, 3b, 3a', 3b') dotée d'un frein de roue avant et au moins deux roues arrière (4a, 4b, 4a', 4b'; 5a', 5b') disposées sur un essieu arrière commun du véhicule et présentant chacune un frein de roue arrière, ainsi qu'un cylindre (6a, 6b, 6a', 6b') de frein de roue avant qui commande la ou les roues avant (3a, 3b, 3a', 3b') et qu'un premier cylindre (7a, 7a', 8a') de frein de roue arrière qui commande les roues arrière respectives (4a, 4b, 4a', 4b', 5a', 5b') et un deuxième cylindre (7b, 7b', 8b') de frein de roue arrière, le ou les cylindres (6a, 6b, 6a', 6b') de frein de roue avant étant régulés par un procédé selon l'une des revendications 1 à 12, et dans lequel, dans une phase de commande (t_Ent1) du premier cylindre (7a, 7a', 8a') de frein de roue arrière, le deuxième cylindre (7b, 7b', 8b') de frein de roue arrière est maintenu pendant une durée de maintien (t_H1) et le deuxième cylindre (7b, 7b', 8b') de frein de roue arrière est maintenu pendant la durée de maintien (t_H1) de préférence jusqu'à ce que la phase de commande (t_Ep0) ou une phase d'évacuation d'air (t_Ent1) qui suit la phase de commande (t_Ep0) du premier cylindre (7a, 7a', 8a') de frein de roue arrière soit terminée ou jusqu'à ce que la phase de commande (t_Ep0) du cylindre (7a, 7a', 8a') de frein de roue arrière ait dépassé une valeur de seuil temporelle prédéterminée de commande et inversement.

14. Véhicule (1, 1') comprenant au moins un système de freinage ABS, une roue (3a, 3b, 4a, 4b, 3a', 3b', 4a', 4b', 5a', 5b') dotée d'un frein de roue et un cylindre de frein (6a, 6b, 7a, 7b, 6a', 6b', 7a', 7b', 8a', 8b') commandant la force de freinage de la roue (3a, 3b, 4a, 4b, 3a', 3b', 4a', 4b', 5a', 5b'), le système de freinage ABS étant conçu pour exécuter un procédé selon l'une des revendications 1 à 13.

15. Véhicule selon la revendication 14, dans lequel le système de freinage ABS présente un appareil électronique de commande ABS (2, 2') au moyen duquel le cylindre de frein (6a, 6b, 7a, 7b, 6a', 6b', 7a', 7b', 8a', 8b') peut être commandé, l'appareil de commande ABS (2, 2') étant conçu pour exécuter un procédé selon l'une des revendications 1 à 13.

16. Véhicule selon les revendications 14 ou 15, dans lequel la ou les roues sont une roue avant (3a, 3b, 3a', 3b') disposée sur un essieu avant du véhicule (1, 1') et le cylindre de frein un cylindre (6a, 6b, 6a', 6b') de frein de roue avant.

17. Véhicule selon la revendication 16, comprenant de plus deux roues arrière (4a, 4b, 4a', 4b', 5a', 5b') disposées sur un essieu arrière commun du véhicule et présentant chacune un frein de roue arrière, ainsi qu'un premier cylindre (7a, 7a', 8a') et qu'un deuxième cylindre (7b, 7b', 8b') de frein de roue arrière qui commandent les roues arrière (4a, 4b, 4a', 4b', 5a', 5b') respectives.
